# EUROPÄISCHE PATENTANMELDUNG

(11) **EP 4 832 379 A1**
(43) Veröffentlichungstag der Anmeldung: **28.10.2026**
(21) Anmeldenummer: 25195466.5
(22) Anmeldetag: 12.08.2025
(51) Int. Cl.: H04B 17/14, H04B 17/21

(54) **VERFAHREN UND TRANSCEIVER ZUR ERMITTLUNG DES CFO UND VON STÖRUNGEN**

(30) Priorität: 23.04.2025 DE 102025115624
(71) Anmelder: Lambda: 4 Entwicklungen GmbH, 22299 Hamburg (DE)
(72) Erfinder: Reimann, Rönne, 22769 Hamburg (DE)
(74) Vertreter: Raffay & Fleck

(57) **Zusammenfassung**

Die Erfindung betrifft die Bestimmung des CFOs sowie von Störungen der Signalübertragung.

Aufgabe der vorliegenden Erfindung ist, es die CFO genau und einfach zu bestimmen, Auswirkungen zu korrigieren und/oder Störungen und/oder Asymmetrien der Übertragungsrichtungen zu erkennen.

Gelöst wird die Aufgabe durch ein Verfahren zur Bestimmung mindestens einer Abweichung zwischen den Frequenzen zweier Transceiver, wobei die Transceiver bei mindestens zwei unterschiedlichen Frequenzen Signale zwischen einander austauschen, wobei die Übertragung des mindestens einen Signals zwischen Sender und Empfänger je Richtung auf mindestens zwei unterschiedlichen Frequenzen, nacheinander über mindestens zwei Antennenpfade erfolgt, wobei der Wechsel zwischen den mindestens zwei Antennenpfaden bei konstanter Frequenz der Frequenzgeber erfolgt,
wobei mindestens ein Paar von Phasendifferenzen pro Richtung und pro Frequenz gebildet wird und aus den mindestens zwei Paaren jeweils zweite Differenzen jeweils zwischen den zwei Richtungen gebildet werden und aus den zweiten Differenzen die mindestens eine Abweichung unter Mittelung und/oder Regression bestimmt wird.

## Beschreibung

Die Erfindung betrifft die Bestimmung des CFOs sowie von Störungen der Signalübertragung.

Es sind zahlreiche Verfahren bekannt, um den carrier frequency offset (CFO) zu bestimmen und zu korrigieren, sowie Störungen zu ermitteln. Die Thematik ist theoretisch breit diskutiert, wirft in der Praxis aber immer wieder Probleme auf, da mit wechselnden und komplexen Umgebungen, begrenzten, ungenauen und/oder unterschiedlichen Hardwareressourcen und in kurzer Zeit, insbesondere unter 500 ms zuverlässige Messungen der Einwegkanalantwort, der Entfernung und/oder Orientierung zwischen zwei oder mehreren, dann in der Regel paarweise, Transceivern gefordert sind.

Es ist dazu auch bekannt, zahlreiche Frequenzen und mehrere Antennenpfade zu nutzen. Auch ist eine Erkennung, insbesondere auch eine fortlaufende, Nachführung der CFO bekannt, um die Auswirkungen der CFO auf die Messungen gering zu halten und/oder zu korrigieren.

Grundsätzlich wird zum Beispiel bei OFDM eine CF-Genauigkeit von +-20ppm gefordert. Diese reicht aber bei aktuellen Nutzungen im MHz und GHz Bereich bei Weitem nicht aus, um aktuelle Anforderungen zu erfüllen, so dass zahlreiche Verfahren zur Erzielung kleinerer CFOs bekannt sind, wie coarse und fine correction und pilot tracking so zum Beispiel aus Pauk Moose "A technique for orthogonal Frequency Devision Multiplexing Frequency Offset correction", 1994.

Die meisten Verfahren zur Erzielung hoher Genauigkeit setzen dabei eine vorausgehende Grobkorrektur oder mehrstufige Korrektur voraus, um Mehrdeutigkeiten zu vermeiden. Dies ist auch bei der vorliegenden Erfindung der Fall, die eine zusätzliche Grob-Korrektur der CFO bevorzugt, die Mehrdeutigkeiten bei der Durchführung des Verfahrens vermeidet.

Wie der Erfinder erkannt hat, zeigen Schwingkreise von Transceivern, insbesondere PLLs, üblicherweise das Verhalten, dass bei der Veränderung der Frequenz zwischen den Frequenzen ein grundlegender Frequenzfehler weitgehend erhalten bleibt und durch die Veränderung der Vervielfachung bzw. Teilung der Frequenz der Fehler entsprechend der Veränderung skaliert wird.

In der Regel weist eine PLL bei einer ersten Frequenz einen ersten Fehler zu der eingestellten Frequenz auf und wird dieser Fehler beim Umschalten zu einer anderen zweiten Frequenz im Verhältnis der zweiten zur ersten Frequenz skaliert.

Aufgabe der vorliegenden Erfindung ist, es die CFO genau und einfach zu bestimmen, Auswirkungen zu korrigieren und/oder Störungen und/oder Asymmetrien der Übertragungsrichtungen zu erkennen.

Gelöst wird die Aufgabe unter anderem durch ein Verfahren zur Bestimmung mindestens einer Abweichung zwischen den Frequenzen der Frequenzgeber, insbesondere PLLs, zweier Transceiver,
wobei die Transceiver bei mindestens zwei, insbesondere mindestens drei, unterschiedlichen Frequenzen, wobei der Abstand der jeweils benachbarten verwendeten Frequenzen bevorzugt kleiner 10 MHz ist, jeweils mindestens ein, insbesondere constant tone, Signal pro Richtungen zwischen einander austauschen,
wobei das mindestens eine Signal jeweils von einem Transceiver gesendet und vom anderen empfangen wird,
wobei die Übertragung des mindestens einen Signals zwischen Sender und Empfänger je Richtung auf jeder der mindestens zwei unterschiedlichen Frequenzen, nacheinander über mindestens zwei Antennenpfade erfolgt,
wobei der Wechsel zwischen den mindestens zwei Antennenpfaden bei konstanter Frequenz der Frequenzgeber und insbesondere ohne Phasensprung und/oder mit bekanntem und/oder kontantem und/oder lediglich von den Antennenpfaden des Wechsels abhängigem Phasensprung, erfolgt,
   wobei der jeweils empfangene Transceiver jeweils Phasenmessungen an dem empfangenen Signal, gegen seinen Frequenzgeber zur Bestimmung mindestens einer ersten Phasendifferenz (delta_Ph) zwischen den mindestens zwei Antennenpfaden bei jeweils konstanter Frequenz der Frequenzgeber für die mindestens zwei unterschiedlichen Frequenzen durchführt,
   wobei mindestens ein Paar von Phasendifferenzen pro Richtung und pro Frequenz der mindestens zwei unterschiedlichen Frequenzen, gebildet wird und
   aus den mindestens zwei Paaren unterschiedlicher Richtung und gleicher Frequenz jeweils zweite Differenzen jeweils zwischen den zwei Richtungen gebildet werden und
   aus den zweiten Differenzen die mindestens eine Abweichung unter Mittelung und/oder Regression bestimmt wird.

Dabei werden die Frequenzgeber bevorzugt bereits vor Ausführung des Verfahrens auf die gleiche Frequenz eingestellt und bevorzugt sogar angeglichen, so dass das Verfahren nur noch relativ geringe Unterschiede, insbesondere von weniger als 20 ppm, bevorzugt weniger als 5 ppm korrigieren/ermitteln muss.

Die verwendeten unterschiedlichen Frequenzen liegen dabei bevorzugt paarweise mit relativ geringem Abstand, bevorzugt unter 20% des von den Transceivern verwendeten Frequenzbands, insbesondere unter 10 MHz, bevorzugt unter 5 MHz, überspannen aber bevorzugt ein deutlich breiteres Frequenzband, insbesondere das von den Transceivern und/oder des für die Funkanwendung verwendete Frequenzband zu zumindest 80% seiner Breite.

Bei den Signalen handelt es sich insbesondere um Funksignale, insbesondere mit Frequenzen über 1 GHz, und/oder um Bluetooth-Signale.

Unter einer Richtung ist insbesondere eine Übertragungsrichtung vom ersten der zwei Transceiver zum zweiten oder umgekehrt zu verstehen. Die Signale werden dabei bevorzugt mit der aktuellen Frequenz des Frequenzgebers des sendenden Transceivers gesendet.

Bevorzugt wird das Übertragen über mehrere Antennenpfade auf einer Frequenz nacheinander mit einem festen zeitlichen Abstand so durchgeführt, dass der Beginn des Übertragens über einen Antennenpfad zum Beginn des Übertragens über einen anderen Antennenpfad einen festen Abstand aufweist. Bevorzugt gilt dies auch für die Enden und/oder Dauern der Übertragungen, wobei die Abstände jeweils unterschiedliche für Begin, Ende und Dauer sein können, bevorzugt aber identisch sind.

Insbesondere ist die zeitliche Abfolge des Austausches über die mindestens zwei Antennenpfade (also insbesondere die Abfolge der Nutzung der Antennenpfade für den Austausch) zwischen den beiden Richtungen bei einer Frequenz bekannt, insbesondere identisch, aber zwischen den mindestens zwei Frequenzen insbesondere vertauscht, verändert und/oder nicht identisch, insbesondere invertiert. Dadurch lassen sich unterschiedliche Einflüsse, wie CFO, Asymmetrien der Übertragungsrichtung und/oder Transceiver, wie Filter oder unterschiedliche Charakteristiken von Sende- und Empfangsverstärker eines Transceivers und Störungen besser unterscheiden und so besser korrigieren/berücksichtigen.

Insbesondere sind die verwendeten Antennenpfade, insbesondere auch die Reihenfolge ihrer Verwendung zur Übertragung, auf einer Frequenz bei den aufeinanderfolgenden Übertragungen auf einer Frequenz in Hin- und Rückrichtung dieselben, nur in umgekehrter Funkübertragungsrichtung des jeweiligen Antennenpfads.

Insbesondere ist dabei auch die Abfolge des Austausches über die mindestens zwei Antennenpfade zwischen den beiden Richtungen bei einer Frequenz auf dem Hin- und dem Rückweg (abgesehen von der Übertragungsrichtung des jeweiligen Antennenpfades) identisch. Dadurch lassen sich durch Addition der Phasenverschiebungen des Hin- und Rückweges bestimmte Einflüsse, beispielsweise unterschiedliche Phasenverschiebungen unterschiedlicher Antennen und/oder Antennenpositionen und/oder Antennenanbindungen besonders einfach herausrechnen, die sich durch die Summenbildung gegenseitig aufheben.

Bevorzugt wird ein, insbesondere fortlaufendes und/oder Konstantton-, Signal über die mindestens zwei Antennenpfade in eine erste Richtung übertragen bei konstanter Frequenz. Insbesondere wird für die Übertragung in umgekehrte Richtung bei derselben eingestellten und/oder vorangeglichen Frequenz und/oder unveränderter Einstellung der Frequenzgeber, die insbesondere unmittelbar nachfolgend durchgeführt wird, ein insbesondere fortlaufendes und/oder Konstantton-, Signal und/oder das gleiche Signal wie in die erste Richtung, über die mindestens zwei Antennenpfade in die umgekehrte, zweite Richtung übertragen. Insbesondere werden dann die Frequenzen der Frequenzgeber geändert, um Übertragungen auf einer anderen Frequenz durchzuführen, insbesondere abgesehen von der Frequenz und/oder der Auswahl und/oder Reihenfolge der Antennenpfade, identisch.

Bevorzugt wird vom jeweils empfangenen Transceiver an jeder Übertragung über einen Antennenpfad bei einer Frequenz mindestens eine Phasenmessung an dem empfangenen Signal gegen seinen Frequenzgeber durchgeführt.

Insbesondere wird aus den zweiten Differenzen die mindestens eine Abweichung unter Division durch 2 Pi und den zeitlichen Abstand zwischen den Phasenmessungen zur Bildung der Differenz ermittelt.

Mit Vorteil wird die mindestens eine Abweichung durch Mittelung und/oder als Funktion der Frequenz, insbesondere, durch, insbesondere lineare, Regressionsanalyse, insbesondere durch den Nullpunkt, insbesondere gegeben durch das Tupel 0Hz und keine Differenz, bestimmt. Dadurch lassen sich Messfehler ausgleichen. Zudem kann davon ausgegangen werden, dass die Frequenz von 0Hz ohne Fehler ist (wäre), und dass sich die Abweichung als lineare Funktion vom Nullpunkt aus zumindest in erster Näherung sehr gut abbilden lässt.

Die mindestens eine bestimmte Abweichung, die insbesondere als Funktion der Frequenz bestimmt ist, kann verwendet werden, Phasenmessungen rechnerisch um den aus der CFO stammenden Einfluss auf die gemessene Phasenverschiebung zu korrigieren, insbesondere trifft dies auf Differenzen von Phasenmessungen oder aufsummierte Rundlaufphasenmessungen, da darin absolute Phasenoffsets rechnerisch eliminiert werden können.

Bevorzugt beinhaltet das Verfahren die Erkennung von Störungen der und/oder von Asymmetrien zwischen den Übertragungen, insbesondere der Richtungen der Übertragungen, zwischen den Transceivern, indem korrigierte erste und/oder zweite Differenzen unterschiedlicher Richtungen der Übertragung zwischen den Transceivern auf Unterschiede untersucht werden und insbesondere diese Unterschiede als Maß für Störung und/oder Asymmetrie verwendet werden, wobei insbesondere die korrigierten ersten und/oder zweiten Differenzen wie die ersten/zweiten Differenzen jedoch unter Korrektur der Phasenmessungen, aus denen sie gewonnen werden, um den Einfluss der mindesten einen Abweichung und/oder Asymmetrie, gewonnen werden.

Durch das Verfahren können auch Störungen und Asymmetrien erkannt werden. Dabei ist der Erkennung von Störungen bei vorhandenen Asymmetrien bevorzugt die Berechnung letzterer vorgeschaltet, um diese bei der die Erkennung der Störungen zu berücksichtigen.

Dabei handelt es sich bei den Asymmetrien insbesondere um richtungsabhängige und werden die Störungen und Asymmetrien bevorzugt frequenz- und/oder antennenpfadabhängig, insbesondere pro Frequenz und/oder Antennenpfad, bestimmt. Asymmetrien werden bevorzugt für spätere Verwendung bei späteren Funkübertragungen zwischen den beiden Transceivern und darauf basierenden Berechnungen gespeichert, da sie in der Regel, im Gegensatz zu Störungen, gerätepaarspezifisch und zeitunabhängig und überwiegend auch umgebungsunabhängig sind.

Bevorzugt wird eine Mehrzahl von Asymmetrien zwischen den Übertragungen der Transceiver bestimmt, indem um den Einfluss aus der mindesten einen Abweichung korrigierte erste Differenzen, insbesondere gleicher Frequenz und Antennenpfad, unterschiedlicher Richtungen der Übertragung zwischen den Transceivern auf Unterschiede untersucht werden und insbesondere diese Unterschiede als Maß für die Asymmetrie verwendet werden, wobei die korrigierten ersten Differenzen wie die ersten Differenzen jedoch unter Korrektur der Phasenmessungen, aus denen sie gewonnen werden, um den Einfluss aus der mindesten einen Abweichung gewonnen werden.

Zur Erkennung von Störungen wird bevorzugt aus der Mehrzahl der Asymmetrien mindestens eine gefilterte Asymmetrie, insbesondere pro verwendeter Frequenz und/oder Antennenpfad und/oder pro bestimmter Asymmetrie, oder mindestens ein geglätteter Asymmetriegang über eine Frequenzspanne und/oder Mehrzahl von Frequenzen, insbesondere pro Antennenpfad, bestimmt.

Insbesondere wird die Mehrzahl von Asymmetrien mit der mindestens einen gefilterten Asymmetrie oder dem geglättetem Asymmetriegang verglichen und die im Vergleich erhaltene Abweichung als Maß für eine Störung verwendet.

Das Maß einer Störung kann für die Gewichtung oder den Ausschluss von Messungen für weitere Analysen und/oder für die Wahl der für weitere Übertragungen zu verwendenden Frequenzen, Richtungen und/oder Antennenpfade verwendet werden.

Die mindestens eine Abweichung kann zur Korrektur von Phasenmessungen verwendet werden, beispielsweise mittels ${Ph}_{I , 1 , k}^{′} = {Ph}_{I , 1 , k} - 2 ⋅ π ⋅ {IF}_{k} ⋅ Δ t$

Mit IF als Frequenzabweichung bei der Frequenz k und *Δt* als der Zeit zwischen Senden und Empfang und Ph als Phasenmessung mit den Indizes Transceiver, Antennenpfad, Frequenz und Ph' als der korrigierten Phasenmessung.

Die Phasenasymmetrie zwischen Hin- und Rückweg kann dann ausgedrückt werden als ${PhAsym}_{, 21 , k} = Δ {Ph}_{I , 21 , k}^{′} - Δ {Ph}_{R , 21 , k}^{′}$ mit
Δ *Ph'*_{*I,*21*,k*} = *Ph'_{I,2,k} - Ph'*_{*I,*1*,k*} (erste Differenz unter Verwendung korrigierter Phasenmessungen)

Mit den Indizes Transceiver (I, R), Antennenkombination (21, 12) des Pfades mit Sendeantennennummer des Transceivers (1,2) und Empfangsantennennummer des Transceivers (2,1), Frequenz k.

Zum Beispiel durch Anwendung eines glättenden Filters auf die Phasenasymmetrie über die Frequenzen k erhält man eine kontinuierliche und frequenzabhängige Sollwertfunktion, die aus der gemessenen Phasenasymmetrie selbst generiert wird. ${FPhAsym}_{, 21 , k} = Filter \left〈{PhAsym}_{, 21 , k}\right〉$

Durch einen Vergleich kann dann ein Maß für die Störung gefunden werden: ${dPh}_{21 , k} = \left|\frac{{PhAsym}_{, 21 , k} - {FPhAsym}_{, 21 , k}}{{FPhAsym}_{, 21 , k}}\right| ∗ 100$

Bevorzugt wird es, die Erkennung von Störungen, insbesondere frequenz- und/oder antennenpfadabhängig, zwischen den Übertragungen der Transceiver durchzuführen, indem eine Mehrzahl um den Einfluss aus der mindestens einen Abweichung und insbesondere möglicher Asymmetrie korrigierter Phasenmessungen und/oder erster und/oder zweiter Differenzen aus solch korrigierten Phasenmessungen, insbesondere gleicher Frequenz und/oder Antennenpfad, zwischen den Transceivern auf Unterschiede von einem Erwarteten untersucht werden, wobei die korrigierten ersten Differenzen wie die ersten Differenzen jedoch unter Korrektur der Phasenmessungen, aus denen sie gewonnen werden, gewonnen werden und der Unterschied als Maß für eine Störung verwendet wird.

Das Erwartete kann insbesondere ein aus Messwerten gemittelter und/oder berechneter und/oder mittels Regressionsanalyse und/oder Filter bestimmter Wert oder Null sein. So kann beispielsweise aus mindestens einer Messung auf mindestens einer Frequenz, insbesondere einer Mehrzahl von Messwerten auf einer Mehrzahl von Frequenzen, ein Erwartetes, beispielsweise auf einer anderen Frequenz, berechnet werden. Dazu kann auch eine Regressionsanalyse der Mehrzahl von Messwerten und/oder eine Glättung der Mehrzahl von Messwerten durchgeführt werden und daraus ein Erwartetes bestimmt werden.

Wird beispielsweise die zweite Differenz mit um die Auswirkung der mindestens einen Abweichung bedingten Änderung korrigierten Phasenmessungen gebildet, ist ohne Störung Null zu erwarten.

Bezeichnen die Indexe ini und ref die beiden Transceiver und numerische Indizes Antennenpfade so kann die zweite Differenz (DPH) mit korrigierten Phasen/ersten Differenzen (ohne Sternchen würde es sich um die (originäre) zweite Differenz handeln) bei einer Frequenz der Messung eines Signals auf Hin- und Rückweg beim Empfang gebildet werden als $DPH = \left(Ph*.ini.0-Ph*.ini.1\right) - \left(Ph*.ref.0-Ph*.ref.1\right)$

Dabei sind Ph* die um die Auswirkung der mindestens eine Abweichung und eine mögliche Asymmetrie korrigierten Phasenmessungen (Ph) am empfangenen Signal am jeweiligen durch den Index angegebenen Transceiver.

Der Unterschied von DPH zu Null kann dann als Maß für eine Störung angenommen werden.

Ähnlich kann mit Amplituden verfahren werden $\left(A*.ini.0.k/A*.ini.average\right) - \left(A*.ref.0.k/A*.ref.average\right)$ $\left(A*.ini.1.k/A*.ini.average\right) - \left(A*.ref.1.k/A*.ref.average\right)$ wobei A* die um eine mögliche Asymmetrie korrigierte Empfangsamplitude ist und A* ... average die durchschnittliche Amplitude der Messungen (beispielsweise gemittelt über die gemessenen Amplituden über ausgewählte/vermessene Frequenzen) und F die Frequenz ist. Hier sind zwei Einzelvergleiche gegen Null sinnvoller als die Zusammenfassung beider Zeilen in eine.

Alternativ kann man aber auch zum Beispiel Folgendes (eins oder mehrere) gegen Null vergleichen $\left(A*.ini.0.k/A*.ref.0.k\right) - \left(A*.ini.1.k/A*.ref.1.k\right)$ $\left(A*.ini.0.k/A*.ref.0.k\right) - \left(A*.ini.average/A*.ref.average\right)$ $\left(A*.ini.0.k/A*.ref.0.k\right) - AVERAGE \left(A*.ini/A*.ref\right)$

Über einen, insbesondere glättenden, Filter lässt sich auch ein frequenzabhängiger Amplitudengang des Übertragungskanals berücksichtigen mittels$AC \left(n, k\right) = A . ini . n . k / A . ref . n . k$ mit den Indizes n für die Antennenkombination und k für die Frequenz und ini/ref für den Transceiver und einem glättenden Filter $A * \left(n, k\right) = Filter \left〈AC\left(n, k\right)\right〉$

Ein Maß für die Störung kann dann sein: $\left(AC\left(n, k\right)-A*\left(n, k\right)\right) / A * \left(n, k\right)$

Auch eine Kombination von Phasen und Amplituden ist in komplexen Zahlen möglich, so dass beispielsweise mit iq.ini.0.k als dem iq Wert der beim Transceiver (ini) auf Pfad 0 bei der Frequenz k gemessen wird als "Störpegel"

Betrag $\left(\left(iq.ini.0.k/iq.ini.1.k\right)-\left(iq.ref.0.k/iq.ref.1.k\right)\right)$ angenommen werden kann, wobei auch eine modifizierte Betragsfunktion verwendet werden kann, die beispielsweise i und q Anteile unterschiedlich gewichtet.

In einer bevorzugten Ausführung des Verfahrens werden Eigenschaften der Übertragung zwischen den Transceivern und/oder der und/oder einer Anordnung der Transceiver wiederholt bestimmt und/oder das Verfahren wiederholt ausgeführt, wobei mindestes eine Abweichung und/oder Asymmetrie gespeichert und bei späterer Bestimmung von Eigenschaften der Übertragung zwischen den Transceivern und/oder der und/oder einer Anordnung der Transceiver verwendet wird, insbesondere als erste Annahme vor einer erneuten Bestimmung, wobei eine solche Speicherung und/oder Verwendung insbesondere für mehrere Transceiverpaare und/oder transceiverpaarspezifisch erfolgt.

Wird das Verfahren wiederholt mit unterschiedlichen Paaren durchgeführt und/oder werden Eigenschaften der Übertragung zwischen Transceivern und/oder der und/oder einer Anordnung von Transceivern wiederholt bestimmt, wobei eine Mehrzahl größer zwei an Transceivern verwendet wird und abwechselnd unterschiedliche Paare von Transceivern verwendet werden und mindestens ein Paar Transreceiver wiederholt verwendet wird, können die gespeicherten Werte bei erneuter Verwendung eines Paares, zu dem Werte gespeichert wurden, diese wieder, insbesondere als Initialisierung, verwendet werden. Dies ermöglicht eine schnellere und/oder genauere Einstellung der Funkverbindung und/oder Messung. Dies ist insbesondere dann der Fall, wenn unidirektional Messwerte, insbesondere Phasenmesswerte, also insbesondere Phasenmessungen nur an Signalen in einer Richtung, insbesondere zur Ermittlung von Eigenschaften der Übertragung zwischen den Transceivern und/oder der und/oder einer Anordnung der Transceiver verwendet werden sollen, wie dies beispielsweise aus der WO 2022 096 091 A1 bekannt ist. So kann beispielsweise die Phasenmessung um den durch die Abweichung bedingten Fehler korrigiert werden und/oder die Asymmetrie heraus gerechnet werden, insbesondere in einem Verfahren nach der WO 2022 096 091 A1. Mit besonderem Vorteil ist kann auch die antennenpfad- und/oder frequenzspezifische Phasenverschiebung des Empfangs- und/oder Sendepfads jedes der Transceiver bestimmt und gespeichert werden und kann sie, oder können die gespeicherten Werte beider Transceiver der aktuellen Paarung, dann, auch in bisher unbekannten Paarungen, zur, insbesondere inertialen, Korrektur, insbesondere von Phasenmessungen empfangenen Signal verwendet werden.

Mit besonderem Vorteil wird nach der Bestimmung der mindestens einen Abweichung und/oder Asymmetrie und/oder Störung die mindestens eine bestimmte Abweichung, Asymmetrie und/oder Störung zur Korrektur und/oder Gewichtung beim Vergleich von entfernungsbedingten Phasenverschiebungen und Signallaufzeiten von Übertragungen zwischen den Transceivern verwendet wird, insbesondere zur Erkennung von Relayangriffen. Dies ist beispielsweise aus der WO 2022 096 514 A1 bekannt.

Bevorzugt ist der Transceiver eingerichtet, mit einem identischen Transceiver, das erfindungsgemäße Verfahren durchzuführen. Bevorzugt wird das erfindungsgemäße Verfahren mit mindestens zwei erfindungsgemäßen Transceivern durchgeführt.

Weitere vorteilhafte Ausgestaltungen sollen rein exemplarisch anhand der schematischen Figuren beschrieben werden:
- Fig. 1: zeigt zwei Transceiver (Initiator und Reflektor). Beide weisen zwei Antennen und eine Empfangs- und eine Sendeeinheit auf. Die vier möglichen Antennenpfade (ap) sind durch blaue Wellen illustriert.
- Fig. 2: zeigt eine mögliche Abfolge des Sendens der Signale, oben des Initiators und unten des Reflektors über die Antennenpfade (ap) 1 bis 4 bei einer ersten Frequenz. Diese werden vom jeweils anderen Transceiver empfangen und es werden Phasenmessungen vorgenommen.
- Fig. 3: zeigt eine zur Fig.2 invertierte Abfolge des Sendens der Signale, oben des Initiators und unten des Reflektors über die Antennenpfade (ap) 4 bis 1 bei einer zweiten Frequenz. Diese werden vom jeweils anderen Transceiver empfangen und es werden Phasenmessungen vorgenommen.
- Fig. 4: zeigt einen Frequenzgang der bestimmten Abweichung und eine durch den Ursprung gehende auf die Abweichung gefittete Gerade. Die Gerade kann als Grundlage für die Korrektur der Auswirkung der CFO verwendet werden.

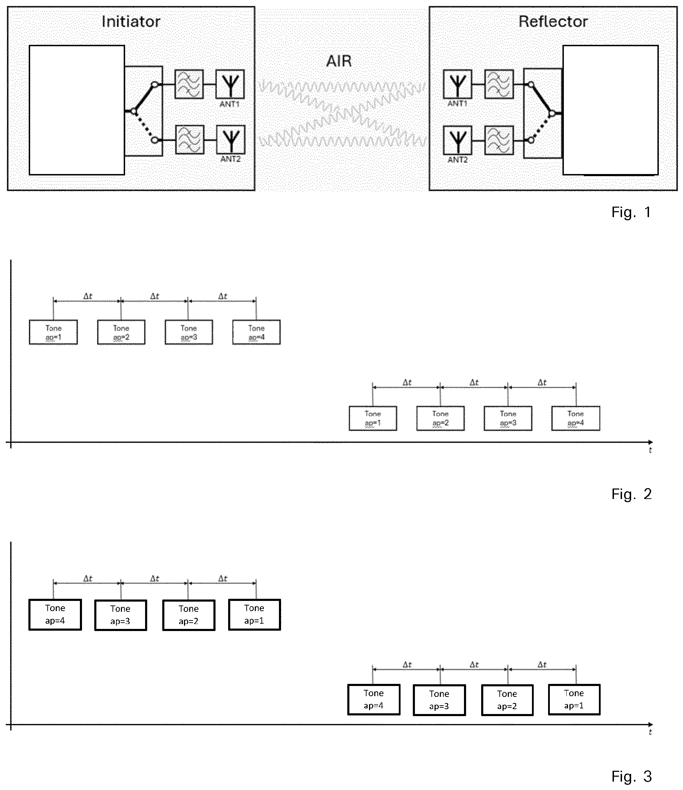

Fig. 1 zeigt zwei Transceiver, einen Initiator und einen Reflector, mit dazwischen liegender Luftschnittstelle (Air). Die Transceiver weisen (jwweils außen ind er Darstellugn) einen Empfangs- und einen Sendekreis auf, der über eine Schaltvorrichtung und mit jeweils einer von zwei Antennen (ANT1, ANT2) wahlweise koppelbar ist. Vor den Antennen sind jeweils Filter angeordnet.

Schematisch sind die Antennenpfade (ap) eins bis vier in der Luftschnittstelle durch Wellenzüge angedeutet:

| ap | Initiator | Reflector |
|---|---|---|
| 1 | ANT1 | ANT1 |
| 2 | ANT1 | ANT2 |
| 3 | ANT2 | ANT1 |
| 4 | ANT2 | ANT2 |

Fig. 2 zeigt eine mögliche Abfolge von Übertragungen bei einer Frequenz, zunächst vom Initiator zum Reflector (oben) und anschließend vom Reflector zum Initiator (unten)

Gekennzeichnet ist immer mit einem vertikalen Strich der Beginn der Übertragung. Dazwischen (bei Übertragungen des selben Transceivers) liegt jeweils ein konstantes Zeitintervall (Δt). Es wird über vier Antennenpfade (ap) übertragen, wie zur Fig. 1 erläutert.

Die Nachfolgenden Übertragungen vom Reflector zum Initiator erfolgen über die selben Antennenpfade in der gleichen Reihenfolge nur in umgekehrter Übertragungsrichtung.

Fig. 3 zeigt Übertragungen vom Initiator zum Relector (oben) und umgekehrt (unten) bei einer weiteren Frequenz mit invertierter Reihenfolge der Antennenpfade (ap).

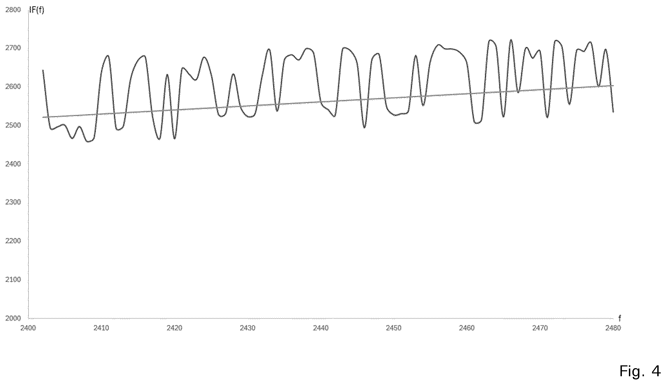

Fig. 4 zeigt einen Frequenzgang der bestimmten Abweichung und eine durch den Ursprung gehende auf die Abweichung gefittete Gerade. Die Gerade kann als Grundlage für die Korrektur der Auswirkung der CFO verwendet werden.

## Patentansprüche

1. Verfahren zur Bestimmung mindestens einer Abweichung zwischen den Frequenzen der Frequenzgeber, insbesondere PLLs, zweier Transceiver,
wobei die Transceiver bei mindestens zwei, insbesondere mindestens drei, unterschiedlichen Frequenzen jeweils mindestens ein Signal pro Richtungen zwischen einander austauschen,
wobei das mindestens eine Signal jeweils von einem Transceiver gesendet und vom anderen empfangen wird,
wobei die Übertragung des mindestens einen Signals zwischen Sender und Empfänger je Richtung auf jeder der mindesten zwei unterschiedlichen Frequenzen, nacheinander über mindestens zwei, insbesondere mindestens drei, Antennenpfade erfolgt,
wobei der Wechsel zwischen den mindestens zwei Antennenpfaden bei konstanter Frequenz der Frequenzgeber erfolgt,
wobei der der jeweils empfangene Transceiver jeweils Phasenmessungen gegen seinen Frequenzgeber zur Bestimmung mindestens einer ersten Phasendifferenz zwischen den mindestens zwei Antennenpfaden bei konstanter Frequenz der Frequenzgeber jeweils für die mindestens zwei unterschiedlichen Frequenzen durchführt,
wobei mindestens ein Paar von Phasendifferenzen pro Richtung und pro Frequenz der mindestens zwei unterschiedlichen Frequenzen, gebildet wird und
aus den mindestens zwei Paaren unterschiedlicher Richtung und gleicher Frequenz jeweils zweite Differenzen jeweils zwischen den zwei Richtungen gebildet werden und
aus den zweiten Differenzen die mindestens eine Abweichung unter Mittelung und/oder Regression bestimmt wird.

2. Verfahren nach Anspruch 1, wobei die mindestens eine Abweichung durch Mittelung und/oder als Funktion der Frequenz, insbesondere, durch, insbesondere lineare, Regressionsanalyse, insbesondere durch den Nullpunkt, insbesondere gegeben durch das Tupel 0Hz und keine Differenz, bestimmt wird.

3. Verfahren nach einem der vorstehenden Ansprüche, wobei es die Korrektur von, insbesondere zumindest der, Phasenmessungen auf Basis der bestimmten mindestens einen Abweichung beinhaltet, insbesondere im Rahmen von phase based ranging, der Ermittlung einer Einwegkanalantwort zwischen den Transceivern, insbesondere in der Frequenzdomäne, und/oder des Vergleichs zwischen Messungen der entfernungsbedingten Phasenverschiebung und Signallaufzeitmessungen zwischen den Transceivern, insbesondere zur Erkennung von Relay-Angriffen auf die Kommunikation, insbesondere zwischen den Transceivern.

4. Verfahren nach einem der vorstehenden Ansprüche, wobei es die Erkennung von Störungen der und/oder von Asymmetrien zwischen den Übertragungen, insbesondere der Richtungen der Übertragungen, zwischen den Transceivern beinhaltet, indem korrigierte erste Differenzen unterschiedlicher Richtungen der Übertragung zwischen den Transceivern und oder zweite Differenzen, insbesondere auf Basis korrigierter erster Differenzen, auf Unterschiede untersucht werden und insbesondere diese Unterschiede als Maß für Störung und/oder Asymmetrie verwendet werden, wobei insbesondere die korrigierten ersten Differenzen wie die ersten Differenzen jedoch unter Korrektur der Phasenmessungen, aus denen sie gewonnen werden, um den Einfluss der mindesten einen Abweichung und bei der Erkennung von Störungen insbesondere auch der Asymmetrie, gewonnen werden.

5. Verfahren nach einem der vorstehenden Ansprüche, wobei es die Erkennung von Störungen, insbesondere frequenz- und/oder antennenpfadabhängig, zwischen den Übertragungen der Transceiver beinhaltet, indem eine Mehrzahl von Asymmetrien zwischen den Übertragungen der Transceiver bestimmt wird, indem um den Einfluss aus der mindesten einen Abweichung korrigierte erste Differenzen, insbesondere gleicher Frequenz und Antennenpfad, unterschiedlicher Richtungen der Übertragung zwischen den Transceivern auf Unterschiede untersucht werden und insbesondere diese Unterschiede als Maß für die Asymmetrie verwendet werden, wobei die korrigierten ersten Differenzen wie die ersten Differenzen jedoch unter Korrektur der Phasenmessungen, aus denen sie gewonnen werden, um den Einfluss aus der mindesten einen Abweichung gewonnen werden und wobei aus der Mehrzahl der Asymmetrien mindestens eine gefilterte Asymmetrie oder ein geglätteter Asymmetriegang über eine Frequenzspanne und/oder Mehrzahl von Frequenzen bestimmt wird und die Mehrzahl von Asymmetrien mit der mindestens einen gefilterte Asymmetrie oder dem geglättetem Asymmetriegang verglichen werden und die Abweichung als Maß für eine Störung verwendet wird oder zweite Differenzen mit um die Auswirkungen der ersten Abweichung und der Asymmetrie korrigierten Phasenmessungen gebildet und als Maß für eine Störung verwendet werden.

6. Verfahren nach einem der vorstehenden Ansprüche, wobei es die Erkennung von Störungen, insbesondere frequenz- und/oder antennenpfadabhängig, zwischen den Übertragungen der Transceiver beinhaltet, indem eine Mehrzahl um den Einfluss aus der mindesten einen Abweichung korrigierter Phasenmessungen und/oder erster und/oder zweiter Differenzen, insbesondere gleicher Frequenz und Antennenpfad, zwischen den Transceivern auf Abweichung von einem Erwarteten untersucht werden, wobei die korrigierten ersten bzw. zweiten Differenzen wie die ersten bzw. zweiten Differenzen jedoch unter Korrektur der Phasenmessungen, aus denen sie gewonnen werden, um die aus der mindestens einen Abweichung bedingten und insbesondere der Asymmetrie bedingten Änderung korrigiert gewonnen werden und die Abweichung von dem Erwarteten als Maß für eine Störung verwendet wird.

7. Verfahren nach einem der vorstehenden Ansprüche, wobei Eigenschaften der Übertragung zwischen den Transceivern und/oder der Anordnung der Transceiver wiederholt bestimmt werden, wobei mindestes eine Abweichung und/oder Asymmetrie gespeichert und bei späterer Bestimmung von Eigenschaften der Übertragung zwischen den Transceivern und/oder der Anordnung der Transceiver verwendet wird, insbesondere als erste Annahme vor einer erneuten Bestimmung, wobei eine solche Speicherung und/oder Verwendung insbesondere für mehrere Transceiverpaare und/oder transceiverpaarspezifisch erfolgt und/oder wobei eine Bestimmung von Eigenschaften der Übertragung zwischen den Transceivern und/oder Anordnung der Transceiver nach der Bestimmung der mindestens einen Abweichung und/oder Asymmetrie und/oder Störung auf Basis von Signalen zwischen den Transceivern in nur eine der Richtungen durchgeführt wird und die mindestens eine bestimmte Abweichung, Asymmetrie und/oder Störung zur Korrektur und/oder Gewichtung der der Signale zur Bestimmung von Eigenschaften der Übertragung und/oder Anordnung der Transceiver auf Basis von Signalen zwischen den Transceivern in nur eine der Richtungen verwendet wird.

8. Verfahren nach einem der vorstehenden Ansprüche, wobei nach der Bestimmung der mindestens einen Abweichung und/oder Asymmetrie und/oder Störung die mindestens eine bestimmte Abweichung, Asymmetrie und/oder Störung zur Korrektur und/oder Gewichtung beim Vergleich von entfernungsbedingten Phasenverschiebungen und Signallaufzeiten von Übertragungen zwischen den Transceivern verwendet wird, insbesondere zur Erkennung von Relayangriffen.

9. Verfahren nach einem der vorstehenden Ansprüche, wobei mindestens zehn unterschiedliche Frequenzen und/oder mindestens drei unterschiedliche Antennenpfade für die Übertragungen zwischen den Transceivern verwendet werden und/oder für mindestens zehn unterschiedliche Frequenzen und/oder mindestens drei unterschiedliche Antennenpfade, insbesondere alle Kombinationen von mindestens zwei, insbesondere mindestens zehn, unterschiedlichen Frequenzen und mindestens drei unterschiedliche Antennenpfaden erste Differenzen und insbesondere daraus mindestens eine zweit Differenz bestimmt wird, insbesondere mindestens drei zweite Differenzen und/oder pro Frequenz und/oder wobei der zeitliche Abstand (Δt)zwischen den Umschaltungen zwischen den Antennenpfaden (ap), zumindest bei konstanter Frequenz, gleich ist.

10. Verfahren nach einem der vorstehenden Ansprüche, wobei es im Rahmen eines phase based ranging und/oder der Ermittlung einer Einwegkanalantwort, insbesondere in der Frequenzdomäne, bevorzugt durch unidirektionale Phasenmessungen, durchgeführt wird und/oder wobei die Signale konstante Töne, Bluetooth-Signale und/oder Channel-Sounding-Signale sind.

11. Transceiver, aufweisend einen Frequenzgeber, insbesondere PLL, und mindestens zwei, insbesondere mindestens drei, Antennen und eingerichtet zum Übertragen von Signalen an einen anderen, insbesondere ebenso ausgebildeten, Transceiver bei mindestens zwei, insbesondere mindestens drei, unterschiedlichen Frequenzen jeweils über die Antennen über unterschiedliche Antennenpfade und zum Empfang von Signalen des anderen Transceivers, bei mindestens zwei, insbesondere mindestens drei, unterschiedlichen Frequenzen jeweils über die Antennen über unterschiedliche Antennenpfade und eingerichtet zur Bestimmung mindestens einer Abweichung zwischen den Frequenzen seines Frequenzgebers und den Frequenzen der empfangenen Signale,
wobei der Transceiver eingerichtet ist den Wechsel zwischen den mindestens zwei Antennenpfaden bei konstanter Frequenz des Frequenzgebers durchzuführen,
wobei der Transceiver eingerichtet ist, die zeitliche Abfolge des Sendens und Empfangens über die mindestens zwei Antennenpfade bei einer Frequenz, insbesondere identisch, aber zwischen den mindestens zwei Frequenzen vertauscht, insbesondere invertiert, durchzuführen und
wobei der der Transceiver eingerichtet ist, Phasenmessungen an den empfangenen Signalen gegen seinen Frequenzgeber durchzuführen und eigerichtet ist zur Bestimmung mindestens einer ersten Phasendifferenz zwischen den mindestens zwei Antennenpfaden bei konstanter Frequenz des Frequenzgeber jeweils für die mindestens zwei unterschiedlichen Frequenzen,
wobei der Transceiver eingerichtet ist, mindestens eine Phasendifferenz pro Frequenz der mindestens zwei unterschiedlichen Frequenzen, zu bilden und unter ihrer Verwendung die mindestens eine Abweichung unter Mittelung und/oder Regression zu bestimmen.

12. Transceiver nach dem vorstehenden Anspruch, eingerichtet mindestens eine Phasendifferenz pro Frequenz der mindestens zwei unterschiedlichen Frequenzen vom anderen Transceiver zu empfangen und Differenzen zwischen den Paaren von Phasendifferenzen gleicher Frequenz aber unterschiedlicher Richtung zu bilden und unter daraus unter Mittelung und/oder Regression die mindestens eine Abweichung zu bestimmen.

13. Verfahren zur Erkennung von Störungen der Übertragung von Signalen zwischen zwei Transceivern, wobei jeder Transceiver mindestens einen Frequenzgeber, insbesondere PLLs, aufweist,
wobei die Transceiver bei mindestens zwei unterschiedlichen Frequenzen jeweils mindestens ein Signal pro Richtung zwischen einander austauschen,
wobei das mindestens eine Signal jeweils von einem Transceiver gesendet und vom anderen empfangen wird,
wobei die Übertragung des mindestens einen Signals zwischen Sender und Empfänger je Richtung auf jeder der mindesten zwei unterschiedlichen Frequenzen, nacheinander insbesondere über mindestens zwei Antennenpfade erfolgt,
wobei insbesondere der Wechsel zwischen den mindestens zwei Antennenpfaden bei konstanter Frequenz der Frequenzgeber erfolgt,
wobei der jeweils empfangene Transceiver jeweils Amplitudenmessungen zur Bestimmung mindestens einer ersten Amplitudendifferenz und/oder eines ersten Amplitudenverhältnisses zwischen den mindestens zwei Richtungen bei konstanter Frequenz der Frequenzgeber und insbesondere konstantem Antennenpfad für die mindestens zwei unterschiedlichen Frequenzen durchführt,
wobei mindestens ein Paar von Amplitudenverhältnissen zwischen den Richtungen pro Frequenz und insbesondere pro Antennenpfad der mindestens zwei unterschiedlichen Frequenzen, gebildet wird und daraus unter Glättung eine frequenzabhängiges und insbesondere Antennenpfad abhängiges Sollamplitudenverhältnis gebildet wird, insbesondere als Funktionsschar über die Frequenz, insbesondere als Schar bzgl. der Antennenpfade, und
für die Amplitudenverhältnisse jeweils die Amplitudendifferenz zu dem entsprechenden Sollamplitudenverhältnis gebildet wird, insbesondere relativ zum entsprechenden Sollamplitudenverhältnis, und das Ergebnis mit einer vorbestimmten Grenze verglichen wird, um bei Überschreiten der vorbestimmten Grenze eine Störung der Übertragung anzunehmen und insbesondere Messungen, Frequenzen und/oder Antennenpfade und/oder Frequenz-Antennenpfadkombinationen, bei denen Störungen erkannt wurden für weitere Verarbeitungen, insbesondere zur Bestimmung von Entfernungen oder Winkeln, niedriger zu Gewichten als ungestörte und/oder nicht zu berücksichtigen.

14. Verfahren nach einem der vorstehenden Ansprüche, wobei es die Erkennung von Störungen, insbesondere frequenz- und/oder antennenpfadabhängig, zwischen den Übertragungen der Transceiver beinhaltet, indem eine Mehrzahl um den Einfluss aus der mindesten einen Abweichung korrigierter Phasenmessungen und/oder erster Differenzen, insbesondere gleicher Frequenz und Antennenpfad, zwischen den Transceivern und zu den Messungen entsprechende Amplitudendifferenz auf Abweichung, insbesondere von einem Erwarteten und/oder gemittelten Verlauf, untersucht werden und die Abweichung als Maß für eine Störung verwendet wird und/oder wobei die zeitliche Abfolge des Austausches über die mindestens zwei Antennenpfade zwischen den beiden Richtungen bei einer Frequenz identisch aber zwischen den mindestens zwei Frequenzen vertauscht ist.

15. System aus mindestens zwei Transceivern, eigerichtet jeweils nach dem Vorstehenden Anspruch und/oder zur Durchführung eines Verfahrens nach einem der vorstehenden Ansprüche.
